# EUROPEAN PATENT SPECIFICATION

(11) **EP 1 536 579 B1**
(45) Date of publication and mention of the grant of the patent: **19.07.2006**
(21) Application number: 03292928.3
(22) Date of filing: 25.11.2003
(51) Int. Cl.: H04B 10/155, H04B 10/158

(54) **Modified DPSK optical transmission system**
Modifiziertes DPSK optisches Übertragungssystem
Système de transmission optique DPSK modifié

(43) Date of publication of application: 01.06.2005
(73) Proprietor: ALCATEL, 75008 Paris (FR)
(72) Inventor: Bissessur, Hans, 75014 Paris (FR)
(74) Representative: Rausch, Gabriele

(56) References cited:
- WO-A-03/092237
- US-A1- 2003 147 646
- US-B1- 6 388 786
- SWANSON E A LIVAS J C ET AL: "HIGH SENSITIVITY OPTICALLY PREAMPLIFIED DIRECT DETECTION DPSK RECEIVER WITH ACTIVE DELAY-LINE STABILIZATION" IEEE PHOTONICS TECHNOLOGY LETTERS, IEEE INC. NEW YORK, US, vol. 6, no. 2, 1 February 1994 (1994-02-01), pages 263-265, XP000439768 ISSN: 1041-1135

## Description

### Background of the Invention

The invention is related to a modified DPSK optical transmission system with a modulator and the corresponding demodulator.

Differential phase-shift keying (DPSK) is a special phase-shift keying format that is used for digital transmission in which the phase of the carrier is discretely varied (a) in relation to the phase of the immediately preceding signal element and (b) in accordance with the data being transmitted. Phase shift keying is used in digital transmission, comprising an angle modulation in which the phase of the carrier is discretely varied in relation either to a reference phase or to the phase of the immediately preceding signal element, in accordance with data being transmitted. In a communications system the representing of characters, such as bits or quaternary digits is realized by a shift in the phase of an electromagnetic carrier wave with respect to a reference, by an amount corresponding to the symbol being encoded. For example, when encoding bits, the phase shift could be 0° for encoding a "0," and 180° for encoding a "1," or the phase shift could be-90 for "0" and +90° for a "1," thus making the representations for "0" and "1" a total of 180° apart. In PSK systems designed so that the carrier can assume only two different phase angles, each change of phase carries one bit of information, i.e., the bit rate equals the modulation rate.

Presently installed WDM systems for transmitting optical signals use intensity modulation for optical transmission. However, phase modulation allows using a balanced detector at the receiver end, and improves the OSNR sensitivity by 2 to 3 dB, therefore increasing the system reach.

For example the use of a balanced detector is described in an article by Eric A. Swanson, Jeffrey C. Livas and Roy S. Bondurant, entitled "High Sensitivity Optically Preamplified Direct Detection DPSK Receiver With Active Delay-Line Stabilization," in IEEE Photonics Technology Letters, Vol. 6, No. 2, Feb. 1994. This article describes an optical communication system that modulates digital information onto transmitted light using differential phase shift keying (DPSK) and then demodulates this information using an actively tuned unbalanced Mach-Zehnder optical interferometer that is tuned using an apparatus and a method known in the art. The unbalanced Mach-Zehnder optical interferometer has an additional optical path length in one leg that provides a propagation delay duration of one data bit. The imbalance in the Mach-Zehnder optical interferometer enables light in one data bit to be optically interfered with light in the data bit immediately following this data bit. The relative state of optical phase between these two DPSK data bits determines in which of the two output legs of the interferometer light is produced provided that the unbalanced Mach-Zehnder optical interferometer is properly tuned within a fraction of a wavelength of the light. Light produced from one leg constitutes digital "ones" while light produced in the other leg constitutes digital "zeros" in the transmitted digital information signal. This article also describes an apparatus and a method for using optical amplification to improve receiver sensitivity that utilizes a doped optical fiber amplifier to boost the signal level and a Fabry-Perot narrow band filter to remove the out-of-band amplified spontaneous emission (ASE) introduced by the fiber amplifier.

The apparatus described in the article includes a laser and a phase modulator for producing an optical DPSK signal at a preselected wavelength, a 10 GHz tunable fiber Fabry-Perot filter and an automatic controller for dithering the pass band wavelength of the filter so as to keep the peak of the filter at the optical signal wavelength, a tunable unbalanced Mach-Zehnder optical interferometer, a dual balanced detector and a feedback electronic circuit coupling the signal developed across one detector of the balanced detector to one leg of the Mach-Zehnder interferometer. Two different approaches are described for tuning the optical path length in the unbalanced Mach-Zehnder optical interferometer. In the first approach, the interferometer is made of optical fiber and one leg of the interferometer is wrapped around a piezoelectric transducer (PZT) that enables an electronic signal to stretch the fiber, thereby increasing the optical path length. In the second approach, the interferometer comprises a silica integrated optical waveguide with an integral thermal heater that enables an electronic signal to increase the temperature of one leg of the interferometer, thereby increasing the optical path length. To tune the Mach-Zehnder interferometer a small electronic dither signal is applied to the actively tuned optical path length to provide a feedback signal for the electronic controller. This enables proper adjustment of the optical path length. The path length is adjusted around 1 bit delay, with a precision much below 1%. Electronic synchronous detection techniques on this dither signal are used to provide the appropriate corrections to the optical path length, enabling the error in tu²ning to be below an acceptable level.

DPSK is actually considered as a good candidate for future 10 or 40 Gb/s systems, where it has enabled record transmission distances at 40 Gb/s above 10 000 km in the lab.

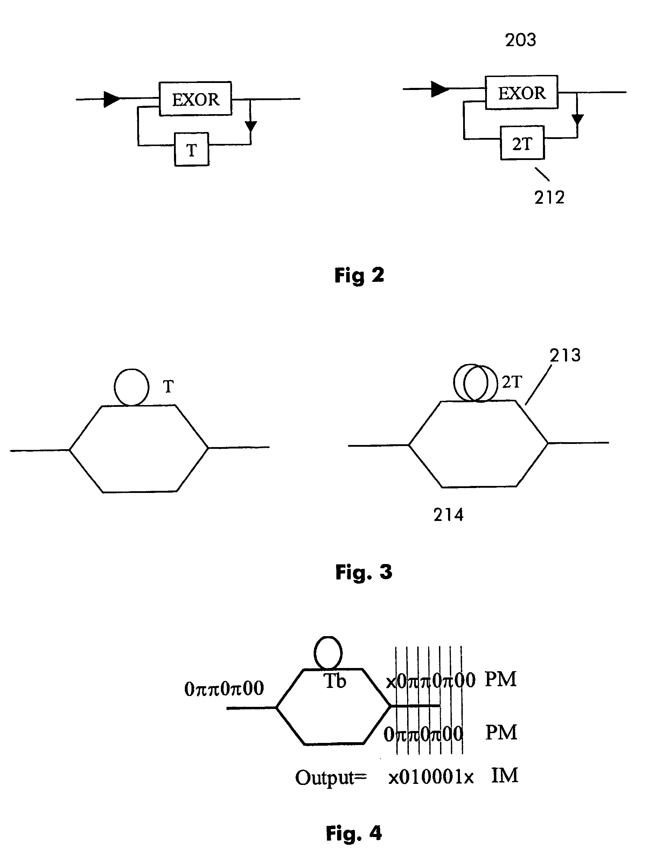

However, DPSK needs a precoding stage at the transmitter. This function is realized electronically, and needs typically an EXOR function with a delay of one bit-time , as shown in Fig 2 left hand.. At 40 Gb/s, this delay is difficult to realize because of the short bit time T (25 ps); this means that the delay between the input and the output of the EXOR function has to be below 25 ps, and that the external "feedback line" also has to be fabricated with a delay below 25 ps, so that the sum of the delay through the EXOR function and the delay line is exactly 25 ps.
In a known solution the pre-coding function in a differential coder can be performed at lower bit-rate (10 Gb/s), after demultiplexing the 40 Gb/s signal into 4 tributary channels.
This solution arises some problems, because the 4 tributaries at 10 Gb/s have to be synchronized for coding and recombined without jitter.
Another solution is disclosed in WO 03/092237. An ASK modulation is combined with a PSK modulation and the resulting DSPK is used to improve band efficiency.
In The US 6,388,786 a duobinary signal is used, while the phase modulation of the signal is realized in applying a delay of 0.5 bit on the output of the precoder.
Both methods face the problem, that the components must work at high bit rates.

### Summary of the Invention

The invention solves the problem by using a modified modulator for the DSPK format with a differential coder that has a delay in the feed back loop longer than one bit period T.

One example is a 2T instead of T (T being the bit-time). In this case the time delay between the output and input of the EXOR function needs only be below 50 ps at 40 Gb/s, and the external "feedback line" can be fabricated with a delay of 50 ps.
As a consequence, the fabrication tolerance of the differential coder is relaxed.
The invention is explained in the figures and the description of the figures as follows:
Fig. 1 One embodiment of a DPSK transmission system
Fig. 2 common (left figure) and invention (right figure) differential coder
Fig. 3 common and inventional solution with a Mach Zehnder Filter
Fig. 4 Interference result of a Mach Zehnder filter with one bit delay (state of the art). The input signal is coded in phase (PM=Phase Modulation). The output signal is coded in intensity (IM=Intensity Modulation)
Fig. 5 Eye diagram of DSPK after the Mach-Zehnder filter (left) and comparison of optical filters with T and 2T delay line (calculation of the penalty induced by a shift of the Mach-Zehnder filter at the receiver stage, either with stanrard DPSK, or with the DPSK with 2T delay according to the new invention).

### Short Description of the Invention

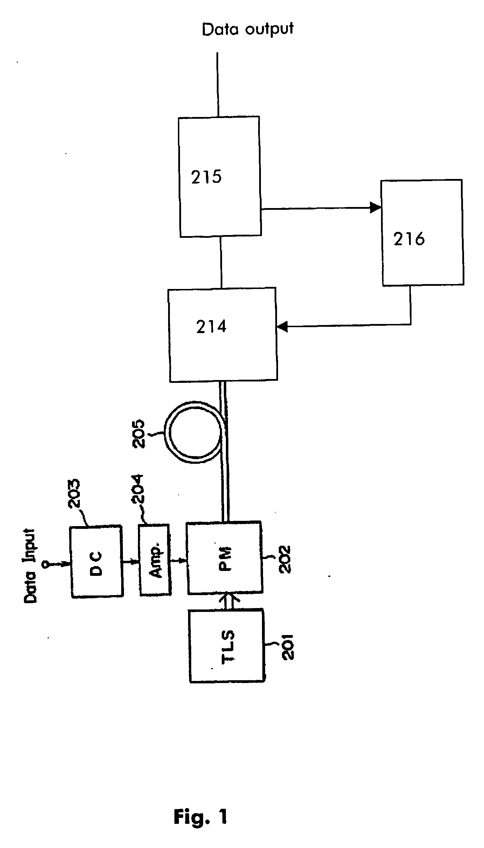

A block diagram of a possible DPSK transmission system is shown in FIG. 1. On the transmitter side, reference numeral 201 denotes a transmission light source formed of a semiconductor laser oscillating at fixed amplitude and frequency and 202 denotes a phase modulator. Actually, a Mach-Zehnder modulator biased at its minimum transmission point can also be used to generate a phase modulation; this is the most widely DPSK modulator used today for modulating the phase of light from the transmission light source 201. In order that the demodulation by means of a one-bit delayed signal is performed on the receiver side, input data is previously modified on the transmitter side into a differential code by a differential coder 203 and the code is supplied to the phase modulator 202 through an amplifier 204.
The light transmitted to the receiver side through an optical fiber link 205 is fed to a Mach Zehnder Filter 214 at the receiver side. The transmitted data are filtered in the Mach Zehnder filter 214 before they are converted from the optical to the electrical signals. The detector 215 is for example a dual balanced detector as described in the prior art. The feed back loop the detector 215 is connected to the Mach Zehnder filter via a control mean 216 that apply a signal for stabilization of the unbalanced Mach Zehnder filter. A dithering technique is useful for the electronic stabilization of the filter function.

For higher bit rate system an optical filtering is advantageous. Mandatory for the use of the DSPK in a WDM system is the optical filtering for channel selection.

In a DPSK system, a differential coder 203 changes the input electrical data into a different data stream. With conventional DPSK, this differential coder 203 needs a delay line 212 of exactly one bit-time T between the output of the EXOR function and its input. This means the EXOR is performed between the current bit of the original signal and the previous bit of the new signal. The resulting signal is applied to an electro optic phase modulator 202, which transforms it into a phase-coded optical signal. For example, the "0" bits are coded with a phase of π, the "1"s with a phase of 0. The signal is transmitted over a fibre link 205 consisting of optical fibre spans and amplifiers.
At the receiving end, the optical phase-coded signal is transformed into an amplitude-coded signal by a Mach-Zehnder (MZ) filter 214.
The principle of the filter is the following: one of its arms is delayed by one bit-time delay in the delay line 213 with respect to the other arm; therefore, at the output of the filter, the interference of the signal with itself, delayed by one bit-time, is detected. If the two bits have the same phase, constructive interference gives maximum power ("1"). If the two bits have opposite phases, destructive interference gives minimum power ("0")

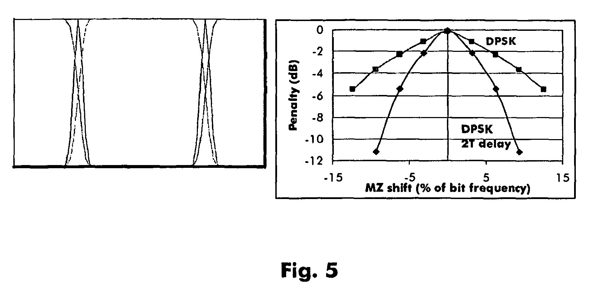

According to the invention, a DPSK format with 2-bit delay is proposed. The differential coder 203 then needs a loop of 2T 212, and is easier to fabricate. However, the MZ filter also needs a 2 bit delay 213 in one arm see Fig. 3, and, as a consequence, the filter positioning tolerance is decreased as it is shown in the performance measurement of Fig. 5. The tolerance is only half that of classical DPSK. At 10 Gb/s, the differential coder is easy to fabricate, and filter positioning is an issue. Therefore, this new solution is interesting for bit rates of 40 Gb/s and above, where the differential coder is difficult to fabricate, and the optical filter tolerance is larger in terms of absolute frequency shift. This solution also yields an open eye at the receiver end.

## Claims

1. Optical transmission system with transmitter, transmission line and receiver, wherein the receiver comprises a Mach Zehnder Filter with a delay line (213) in one branch adopted with the some delay as used in the differential coder (203) at the transmitter side, where the transmitted signal is modulated by a diffential phase shift keying modulation scheme using a differential coder (203) comprising an EXOR circuit and a phase modulator (202) **characterized in that** the EXOR circuit in the diffential coder (203), has a time delay of at least 2 bits in the attached feed back loop.

2. Optical transmission system according claim 1, **characterized in that** the delay line (213) in the filter is a fiber loop, which is adaptable with a piezoelectric mean.

3. Optical transmission system according claim 1, **characterized in that** the delay line in the filter is an integrated delay line (213) adaptable with thermo elements.

4. Optical transmission system according claim 1, **characterized in that** the receiver comprises control means (216) for controlling and adapting the Mach Zehnder filter (214).

## Patentansprüche

1. Optisches Übertragungssystem mit Sender, Sendeleitung und Empfänger, wobei der Empfänger einen Mach-Zehnder-Filter mit einer Verzögerungsleitung (213) in einem zweig umfasst, die auf die gleiche Verzögerung eingestellt ist wie der Differential-Codierer (203) auf Senderseite, wobei das übertragene Signal anhand eines differentiellen Phasenumtastungs-Modulationsschemas mit Hilfe eines Differential-Codierers (203) moduliert wird, bestehend aus einer EXOR-Schaltung und einem Phasen-Modulator (202), **dadurch gekennzeichnet, dass** die EXOR-Schaltung im Differential-Codierer (203) eine Verzögerungszeit von mindestens 2 Bit in der angeschlossenen Rückkopplungsschleife aufweist.

2. Optisches Übertragungssystem gemäß Anspruch 1, **dadurch gekennzeichnet, dass** es sich bei der Verzögerungsleitung (213) im Filter um eine Faserschleife handelt, die mit einer piezoelektrischen Vorrichtung angepasst werden kann.

3. Optisches Übertragungssystem gemäß Anspruch 1, **dadurch gekennzeichnet, dass** es sich bei der Verzögerungsleitung im Filter um eine integrierte Verzögerungsleitung (213) handelt, die mit Thermoelementen angepasst werden kann.

4. Optisches Übertragungssystem gemäß Anspruch 1, **dadurch gekennzeichnet, dass** der Empfänger Steuervorrichtungen (216) zur Steuerung und Anpassung des Mach-Zehnder-Filters (214) umfasst.

## Revendications

1. Système de transmission optique comportant un émetteur, une ligne de transmission et un récepteur, dans lequel le récepteur comprend un filtre de Mach-Zehnder comportant une ligne à retard (213) dans une branche conçue comme présentant le même retard que celui utilisé dans le codeur différentiel (203) du côté de l'émetteur, où le signal émis est modulé par un principe de modulation différentielle par déplacement de phase utilisant un codeur différentiel (203) comprenant un circuit de type OU EXCLUSIF et un modulateur de phase (202), **caractérisé en ce que** le circuit OU EXCLUSIF dans le codeur différentiel (203) présente un retard de durée d'au moins 2 bits dans la boucle de contre réaction reliée.

2. système de transmission optique selon la revendication 1, **caractérisé en ce que** la ligne à retard (213) dans le filtre est une boucle à fibre, qui peut s'adapter grâce à un moyen piézoélectrique.

3. Système de transmission optique selon la revendication 1, **caractérisé en ce que** la ligne à retard dans le filtre est une ligne à retard intégrée (213) pouvant être adaptée grâce à des thermo éléments.

4. Système de transmission optique selon la revendication 1, **caractérisé en ce que** le récepteur comprend un moyen de commande (216) destiné à commander et à adapter le filtre de Mach-Zehnder (214).
